# EUROPEAN PATENT APPLICATION

(11) **EP 4 667 153 A1**
(43) Date of publication of application: **24.12.2025**
(21) Application number: 23925305.7
(22) Date of filing: 02.03.2023
(51) Int. Cl.: B23Q 11/10

(54) **MACHINE TOOL, CONTROL METHOD OF MACHINE TOOL, AND CONTROL PROGRAM OF MACHINE TOOL**

(71) Applicant: DMG Mori Co., Ltd., Yamatokoriyama-shi, Nara 639-1160 (JP)
(72) Inventor: FUNAKOSHI, Genki, Yamatokoriyama-shi, Nara 639-1160 (JP); YAMAMOTO, Yoshinori, Yamatokoriyama-shi, Nara 639-1160 (JP); KITADE, Yuhei, Yamatokoriyama-shi, Nara 639-1160 (JP)
(74) Representative: Isarpatent
(86) International application number: PCT/JP2023/007720
(87) International publication number: WO 2024/180750

(57) **Abstract**

A machine tool includes: a spindle (180) having a connecting passage connected to a through passage formed in a tool when the tool is mounted to the spindle (180); a pump (56) configured to pump a coolant to a first flow passage connected to the connecting passage; a first valve (58A) provided in the first flow passage or the connecting passage; and a second valve (58B) switchable at least between, with respect to a second flow passage branching off from the first flow passage at a branch point between the pump (56) and the first valve (58A), returning and not returning the coolant present on the first valve (58A) side of the branch point toward the second flow passage. A control unit of the machine tool executes processing of, in a case where discharge of the coolant from the tool is stopped, opening the second valve (58B) and returning at least the coolant present between the first valve (58A) and the tip-side opening of the tool toward the second flow passage, and processing of closing the first valve (58A) and filling a section of the first flow passage between the pump (56) and the first valve (58A) with the coolant.

## Description

### Technical Field

The present disclosure relates to a machine tool, a control method for a machine tool, and a control program for a machine tool.

### Background Art

JP 2013-013968A (Patent Document 1) discloses a machine tool capable of discharging a coolant from the tip of a tool while machining a workpiece. The machine tool includes a spindle and a tool that have a coolant supply passage formed therein, and the coolant flows through the coolant supply passage and is discharged from the tip of the tool.

Furthermore, after the machining of the workpiece by the machine tool ends, drawback processing is executed to suck in any coolant remaining in the coolant supply passage. As a result, the coolant is prevented from dripping from the tip of the tool of the machine tool.

### Citation List

### Patent Document

Patent Document 1: JP 2013-013968A

### Summary of Invention

### Technical Problem

When the drawback processing is executed, the coolant remaining in the flow passage is sucked in. Therefore, it takes a certain amount of time before the coolant is discharged from the tip of the tool the next time. In view of this, there is desire for a technique for shortening this time.

### Solution to Problem

An aspect of the present disclosure provides a machine tool for machining a workpiece using a tool that has a through passage formed therein and is configured to discharge a coolant from a tip-side opening of the through passage. The machine tool includes: a spindle to which the tool is mountable, and having a connecting passage connected to the through passage when the tool is mounted; a pump configured to pump the coolant to a first flow passage connected to the connecting passage; a first valve provided in the first flow passage or the connecting passage; a second valve switchable at least between, with respect to a second flow passage branching off from the first flow passage at a branch point between the pump and the first valve, returning and not returning the coolant present on a first valve side of the branch point toward the second flow passage; and a control unit configured to control the machine tool. The control unit is configured to execute drawback processing of, in a case where discharge of the coolant from the tool is stopped, opening the second valve and returning at least the coolant present between the first valve and the tip-side opening of the tool toward the second flow passage, and filling processing of, after execution of the drawback processing, closing the first valve and filling a section of the first flow passage between the pump and the first valve with the coolant.

In an aspect of the present disclosure, the first valve is provided in the first flow passage. A flow passage from the first valve to the spindle is shorter than a flow passage from the second valve to the spindle.

In an aspect of the present disclosure, the machine tool further includes a third valve provided in a third flow passage branching off from the first flow passage at a branch point between the pump and the first valve. The filling processing further includes opening the third valve.

In an aspect of the present disclosure, the first valve is provided in the first flow passage. A flow passage from the first valve to the spindle is shorter than a flow passage from the third valve to the spindle.

In an aspect of the present disclosure, the branch point of the first flow passage and the third flow passage is closer to the spindle than the branch point of the first flow passage and the second flow passage is.

In an aspect of the present disclosure, the control unit starts execution of the filling processing after a predetermined time has elapsed since starting execution of the drawback processing.

Another aspect of the present disclosure provides a control method for a machine tool for machining a workpiece using a tool that has a through passage formed therein and is configured to discharge a coolant from a tip-side opening of the through passage. The machine tool includes: a spindle to which the tool is mountable, and having a connecting passage connected to the through passage when the tool is mounted; a pump configured to pump the coolant to a first flow passage connected to the connecting passage; a first valve provided in the first flow passage or the connecting passage; and a second valve switchable at least between, with respect to a second flow passage branching off from the first flow passage at a branch point between the pump and the first valve, returning and not returning the coolant present on a first valve side of the branch point toward the second flow passage. The control method includes the steps of: in a case where discharge of the coolant from the tool is stopped, opening the second valve and returning at least the coolant present between the first valve and the tip-side opening of the tool toward the second flow passage; and after execution of the returning step, closing the first valve and filling a section of the first flow passage between the pump and the first valve with the coolant.

Another aspect of the present disclosure provides a control program for a machine tool for machining a workpiece using a tool that has a through passage formed therein and is configured to discharge a coolant from a tip-side opening of the through passage. The machine tool includes: a spindle to which the tool is mountable, and having a connecting passage connected to the through passage when the tool is mounted; a pump configured to pump the coolant to a first flow passage connected to the connecting passage; a first valve provided in the first flow passage or the connecting passage; and a second valve switchable at least between, with respect to a second flow passage branching off from the first flow passage at a branch point between the pump and the first valve, returning and not returning the coolant present on a first valve side of the branch point toward the second flow passage. The control program causes the machine tool to execute the steps of: in a case where discharge of the coolant from the tool is stopped, opening the second valve and returning at least the coolant present between the first valve and the tip-side opening of the tool toward the second flow passage; and after execution of the returning step, closing the first valve and filling a section of the first flow passage between the pump and the first valve with the coolant.

The above and other objects, features, aspects, and advantages of the present invention will become apparent from the following detailed description of the invention taken in conjunction with the accompanying drawings.

### Brief Description of Drawings

FIG. 1 is a diagram illustrating the external appearance of a machine tool.
FIG. 2 is a diagram illustrating an example of a coolant mechanism.
FIG. 3 is a diagram illustrating a control flow of the coolant mechanism in steps S1 and S2.
FIG. 4 is a diagram illustrating the control flow of the coolant mechanism in steps S3 and S4.
FIG. 5 is a diagram illustrating an example of a hardware configuration of a control unit.
FIG. 6 is a flowchart illustrating a flow of pre-processing for tool replacement.
FIG. 7 is a flowchart illustrating a flow of workpiece machining processing.

### Description of Embodiments

Hereinafter, embodiments of the present invention will be described with reference to the drawings. In the following description, like components and constituent elements are designated by like reference signs. Their names and functions are also the same. Therefore, detailed descriptions will not be repeated for them. The embodiments and modified examples described below may be selectively combined in any suitable manner.

### <A. Machine Tool 100>

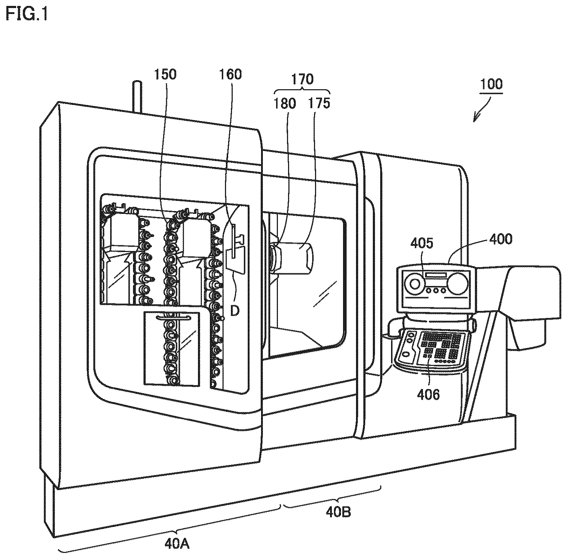

First, a machine tool 100 according to an embodiment will be described with reference to FIG. 1. FIG. 1 is a diagram illustrating the external appearance of the machine tool 100.

In the present specification, the term "machine tool" is a concept that encompasses various types of devices that have a function of machining a workpiece. The machine tool may be a horizontal machining center or a vertical machining center. Alternatively, the machine tool may be a lathe, or may be another cutting machine, a grinding machine, a multifunctional machine, a five-axis machine, or the like. Furthermore, the machine tool is not limited to a machine that performs only subtractive machining, and may be a machine that performs additive machining in addition to subtractive machining.

The machine tool 100 has a tool storage unit 40A and a machining body 40B. The tool storage unit 40A and the machining body 40B are partitioned by a cover.

A magazine 150 and an ATC (Automatic Tool Changer) 160 are provided in the tool storage unit 40A. A spindle head 170 is provided on the machining body 40B.

The spindle head 170 includes a spindle barrel 175 and a spindle 180. The spindle 180 is supported by the spindle barrel 175 so as to be rotatable about the axial direction as the center of rotation.

A tool selected from the magazine 150 is mounted to the spindle 180. More specifically, the machine tool 100 drives the magazine 150 to move a tool that corresponds to a machining step (hereinafter also referred to as the "next tool") to a first tool replacement position. The machine tool 100 also drives the spindle head 170 to move the tool mounted to the spindle 180 (hereinafter also referred to as the "used tool") to a second tool replacement position. Thereafter, the ATC 160 replaces the used tool waiting at the second tool replacement position with the next tool waiting at the first tool replacement position. Tool replacement is performed via a door D provided in the partition between the machining body 40B and the tool storage unit 40A. The door D is a sliding door, and is opened and closed by a drive source such as a motor. Thereafter, the machine tool 100 machines the workpiece using the next tool mounted to the spindle 180.

The machine tool 100 is also provided with an operation panel 400. The operation panel 400 includes a display 405 for displaying various types of information regarding machining, and operation keys 406 for receiving various types of operations performed on the machine tool 100.

### <B. Coolant Mechanism>

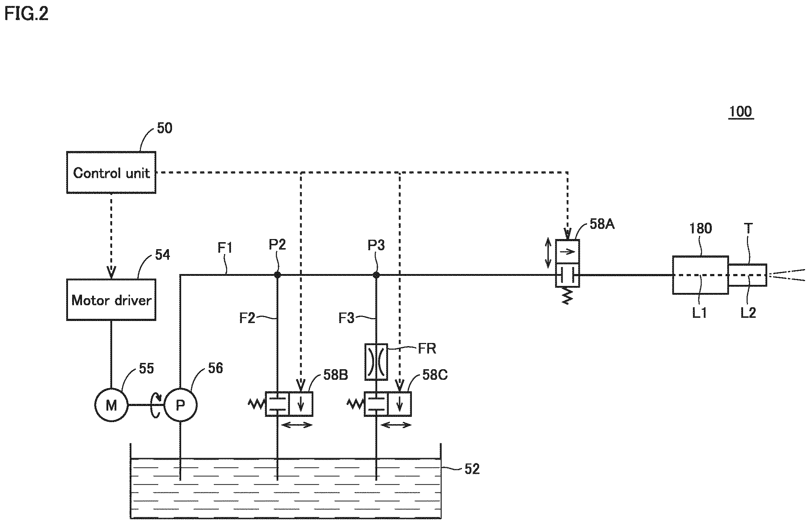

Next, a coolant mechanism provided inside the machine tool 100 will be described with reference to FIG. 2. FIG. 2 is a diagram illustrating an example of the coolant mechanism.

As shown in FIG. 2, the machine tool 100 has coolant flow passages F1 to F3, a control unit 50, a coolant tank 52, a motor driver 54, a pump 56, a pressure holding valve 58A (first valve), a drawback valve 58B (second valve), an orifice valve 58C (third valve), and the spindle 180. The names of the valves are given to facilitate identification of the valves based on the main function of the corresponding one of the flow passages F1 to F3, and are not intended to be interpreted in a restrictive manner as meaning that the valves necessarily have that function on their own. For example, the drawback valve 58B may be a valve that realizes the drawback function on its own, or may be a valve that realizes the drawback function in cooperation with another fluid device such as an ejector. Furthermore, the orifice valve 58C is a valve that can be controlled to any opening degree, and may be capable of functioning as an orifice on its own, or may be capable of realizing that function in cooperation with a separately provided fluid device such as an orifice.

One end of the flow passage F1 is connected to the coolant tank 52. The other end of the flow passage F1 is connected to a connecting passage L1 formed in the spindle 180. For ease of description, the side of the coolant flow passage closer to the coolant tank 52 will also be referred to as the "upstream side", and the side of the coolant flow passage closer to the spindle 180 will also be referred to as the "downstream side".

The flow passage F2 branches off from the flow passage F1 at a branch point P2. In other words, one end of the flow passage F2 is connected to the flow passage F1. The other end of the flow passage F2 may be connected to any desired destination. In the example of FIG. 2, the other end of the flow passage F2 is connected to the coolant tank 52. As another example, the other end of the flow passage F2 may be connected to a reservoir other than the coolant tank 52.

The flow passage F3 branches off from the flow passage F1 at a branch point P3. In other words, one end of the flow passage F3 is connected to the flow passage F1. The other end of flow passage F3 may be connected to any desired destination. In the example of FIG. 2, the other end of the flow passage F3 is connected to the coolant tank 52. As another example, the other end of the flow passage F3 may be connected to a reservoir other than the coolant tank 52.

The connecting passage L1 is formed inside the spindle 180. The connecting passage L1 passes through the inside of the spindle 180 along the axial direction of the spindle 180.

Various types of tools can be mounted to the spindle 180. In the example of FIG. 2, a tool T having a through passage L2 formed therein is mounted to the spindle 180. The through passage L2 extends from the connection interface of the tool T and the spindle 180 to the tip of the tool T, and passes through the tool T along the axial direction of the spindle 180. Note that the through passage L2 formed in the tool T is not limited to being open at the base end surface or the tip end surface of the tool T, and may be open in a side surface of the tool T, for example.

The through passage L2 inside the tool T is connected to the connecting passage L1 inside the spindle 180 when the tool T is mounted to the spindle 180.

The control unit 50 controls various devices in the machine tool 100. The control unit 50 may have any device configuration. The control unit 50 may be configured as a single control unit, or may be configured as a plurality of control units. For example, the control unit 50 includes at least one of a PLC (Programmable Logic Controller) and a CNC (Computer Numerical Control).

The targets controlled by the control unit 50 include, for example, the pump 56, the pressure holding valve 58A, the drawback valve 58B, and the orifice valve 58C.

The pump 56 is provided in the flow passage F1 and pumps the coolant from the coolant tank 52 to the flow passage F1. The force with which the coolant is pumped is controlled by the control unit 50.

More specifically, a motor 55 is connected to the pump 56. The motor 55 is driven by the motor driver 54. The motor driver 54 is constituted by a control circuit, an inverter, and the like. The motor driver 54 receives a control signal from the control unit 50 and outputs, to the motor 55, an alternating current having a frequency that corresponds to the control signal. This changes the rotation speed of the motor 55, thereby controlling the flow rate of the coolant pumped to the flow passage F1.

The pressure holding valve 58A is provided in the flow passage F1 or the connecting passage L1. In the example of FIG. 2, the pressure holding valve 58A is provided in the flow passage F1. Moreover, the pressure holding valve 58A is provided downstream of the pump 56.

The pressure holding valve 58A is configured to be switchable between at least two states including an open state and a closed state in response to a control command from the control unit 50. The opening degree of the pressure holding valve 58A may be adjustable or may be fixed.

When the pressure holding valve 58A is in the closed state, the flow of the coolant between the branch point P3 and the spindle 180 is stopped. On the other hand, when the pressure holding valve 58A is in the open state, the coolant can flow between the branch point P3 and the spindle 180. In this case, the coolant pumped by the pump 56 flows through the flow passage F1, the connecting passage L1, and the through passage L2 in this order, and is discharged from the tip of the tool T onto the workpiece being machined. The spindle 180 having this coolant discharge function is also called a "coolant through spindle".

In the example of FIG. 2, the pressure holding valve 58A is provided in the flow passage F1, but the installation position of the pressure holding valve 58A is not limited to being provided in the flow passage F1. For example, the pressure holding valve 58A may be provided in the connecting passage L1 in the spindle 180.

The drawback valve 58B is provided, for example, in the flow passage F2 branching off from the flow passage F1. The drawback valve 58B is a valve that can be switched at least between returning and not returning the coolant present on the pressure holding valve 58A side of the branch point P2 toward the flow passage F2 that branches off from the flow passage F1 at a branch point between the pump 56 and the pressure holding valve 58A.

For example, the drawback valve 58B is configured to be switchable between at least two states including an open state and a closed state in response to a control command from the control unit 50. The opening degree of the drawback valve 58B may be adjustable or may be fixed.

When the drawback valve 58B is in the closed state, the flow of the coolant through the flow passage F2 is stopped. On the other hand, when the drawback valve 58B is in the open state, the coolant can flow through the flow passage F2.

Typically, the drawback valve 58B is provided upstream of the pressure holding valve 58A. In other words, the length of the coolant flow passage between the pressure holding valve 58A and the spindle 180 is shorter than the length of the coolant flow passage between the drawback valve 58B and the spindle 180.

The orifice valve 58C is provided in the flow passage F3 that branches off from the flow passage F1 at the branch point P3, and controls the flow of the coolant in the flow passage F3. Note that a separate orifice is provided in the flow passage F3 as a fluid resistance FR on the upstream side of the orifice valve 58C. In other words, in this configuration, by opening and closing the orifice valve 58C, it is possible to switch between applying or not applying the fluid resistance FR to the coolant flowing through the flow passage F3. The branch point P3 between the flow passage F2 and the flow passage F3 is provided downstream of the branch point P2 between the flow passage F1 and the flow passage F2.

The orifice valve 58C is configured to be switchable between at least two states including an open state and a closed state in response to a control command from the control unit 50. The opening degree of the orifice valve 58C may be adjustable or may be fixed.

When the orifice valve 58C is in the closed state, the flow of the coolant through the flow passage F3 is stopped. On the other hand, when the orifice valve 58C is in the open state, the coolant can flow through the flow passage F3.

Typically, the orifice valve 58C is provided upstream of the pressure holding valve 58A. In other words, the length of the coolant flow passage between the pressure holding valve 58A and the spindle 180 is shorter than the length of the coolant flow passage between the orifice valve 58C and the spindle 180.

Note that although an example has been described in which the drawback valve 58B is provided in the flow passage F2 and the orifice valve 58C is provided in the flow passage F3, the drawback valve 58B may be provided in the flow passage F3 and the orifice valve 58C may be provided in the flow passage F2.

### <C. Control of Coolant Mechanism>

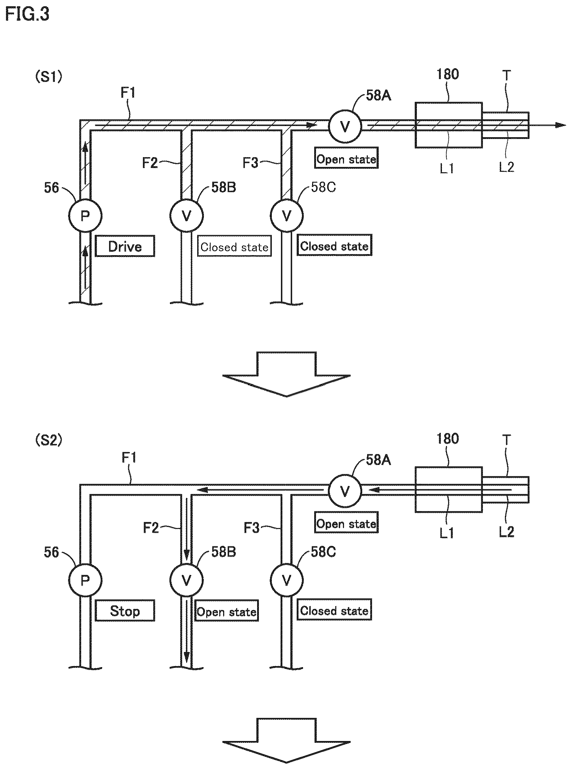

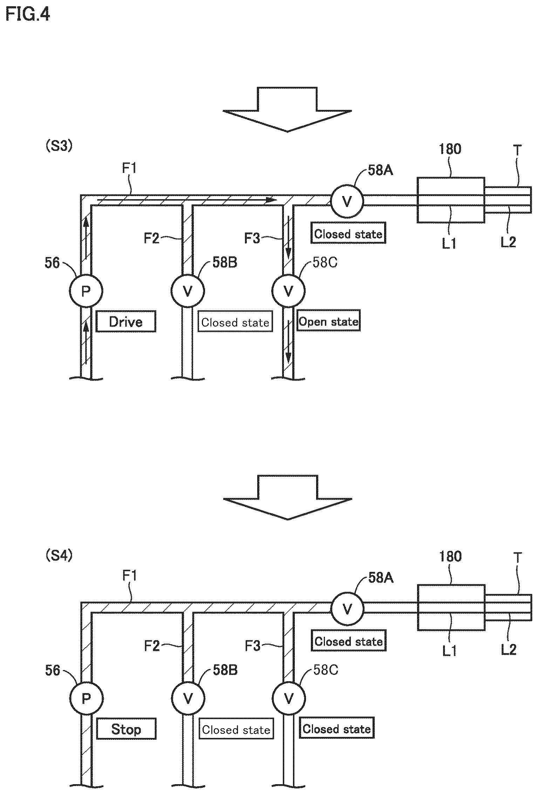

Next, control of the coolant mechanism, including control of the pump 56, the pressure holding valve 58A, the drawback valve 58B, and the orifice valve 58C, and the like will be described with reference to FIGS. 3 and 4. FIG. 3 is a diagram illustrating a control flow of the coolant mechanism in steps S1 and S2. FIG. 4 is a diagram illustrating the control flow of the coolant mechanism in steps S3 and S4. Note that in the present embodiment, the pressure holding valve 58A, the drawback valve 58B, and the orifice valve 58C are normally-closed valves that are closed when no voltage is applied. In other words, the valves are normally closed, but open when a command signal is received from the control unit 50. Needless to say, even if the valves are normally-open valves that are open when no voltage is applied, functions similar to those of the present embodiment can be exhibited by appropriately setting the control signal.

Step S1 shows the state of the coolant mechanism during workpiece machining. In step S1, the control unit 50 sets only the pressure holding valve 58A to the open state. In other words, the drawback valve 58B and the orifice valve 58C are not changed from the closed state. Furthermore, the control unit 50 controls the pump 56 to pump the coolant to the flow passage F1. The coolant pumped through the flow passage F1 flows through the connecting passage L1 and the through passage L2 and is discharged from the tip of the tool T.

Thereafter, it is assumed that the control unit 50 receives a command to stop the discharging of the coolant from the tool T or a command to replace the tool T. As a result, the control unit 50 stops the driving of the pump 56, and executes the drawback processing shown in step S2.

More specifically, in step S2, the control unit 50 switches the drawback valve 58B from the closed state to the open state. The control unit 50 also keeps the pressure holding valve 58A in the open state. The orifice valve 58C is kept in the closed state. Then, the control unit 50 causes at least the coolant present between the pressure holding valve 58A and the tip-side opening of the tool T to return toward the flow passage F2. Typically, the coolant remaining in the connecting passage L1, the through passage L2, and the flow passage F1 is discharged from the flow passage F2. This makes it possible to prevent the coolant from dripping from the tool T and the spindle 180.

Preferably, a suction mechanism such as an ejector (not shown) is provided at the branch point P2 or in the flow passage F2. During the drawback processing, the coolant supplied from the pump 56 at a predetermined flow rate or a predetermined pressure, for example, flows into the ejector, thus exhibiting a suction effect on the downstream side of the branch point P2. As a result, the coolant downstream of the branch point P2 flows in reverse from the flow passage F1 into the flow passage F2.

After executing the drawback processing, the control unit 50 executes filling processing shown in step S3. More specifically, in step S3, the control unit 50 changes the pressure holding valve 58A from the open state to the closed state. The control unit 50 then drives the pump 56 to fill the section of the flow passage F1 between the pump 56 and the pressure holding valve 58A with coolant. As a result, when a new tool T having the through passage L2 is mounted to the spindle 180, the time required for the coolant to be discharged from the tip of the tool T is shortened.

Note that during the coolant filling processing in step S3, the control unit 50 sets the drawback valve 58B to the closed state as shown in the example of FIG. 4. This makes it possible to prevent the coolant from flowing out from the flow passage F2.

During the coolant filling processing in step S3, the orifice valve 58C may be in the open state or the closed state. As shown in the example of FIG. 4, the control unit 50 sets the orifice valve 58C to the open state. If the orifice valve 58C is in the open state, the pressure of the coolant in the flow passage can be prevented from rising too high above a predetermined value even if the pump 56 is not stopped completely and is kept operating at the minimum drive frequency. Therefore, even if discharging of the coolant is repeatedly started and stopped, it is possible to prevent an increase in power consumption caused by repeatedly stopping and starting the pump 56 as in conventional cases.

Preferably, the pressure holding valve 58A is provided on the spindle 180 side in the flow passage F1. The spindle 180 side refers to the vicinity of the spindle 180 in the flow passage F1. For example, the spindle 180 side refers to the section of the flow passage from the center of the flow passage F1 to the spindle 180. As another example, the spindle 180 side refers to the section of the flow passage from the branch point P2 or the branch point P3 to the spindle 180. By providing the pressure holding valve 58A on the spindle 180 side, the coolant fills the section up to the vicinity of spindle 180. As a result, the time required for the coolant to be discharged from the tip of the tool T can be further shortened. Moreover, while realizing such a reduction in the time until coolant discharging starts, it is also possible to achieve energy saving by eliminating the need to repeatedly start and stop the pump 56.

After the coolant filling processing is executed, the control unit 50 executes the processing shown in step S4. More specifically, in step S4, the control unit 50 changes the orifice valve 58C from the open state to the closed state. Also, the pressure holding valve 58A is kept in the closed state, and the drawback valve 58B is kept in the closed state. Thereafter, the control unit 50 stops the pump 56.

Note that although an example has been described in which the pump 56 is stopped in step S4, if the pump 56 is an inverter-driven variable displacement pump, the control unit 50 needs to continue driving the pump 56 at the minimum drive frequency. In this case, in step S4, the control unit 50 drives the pump 56 at the minimum drive frequency while keeping the orifice valve 58C in the open state. The minimum drive frequency is lower than the drive frequency of the pump 56 in step S3.

### <D. Hardware Configuration of Control Unit 50>

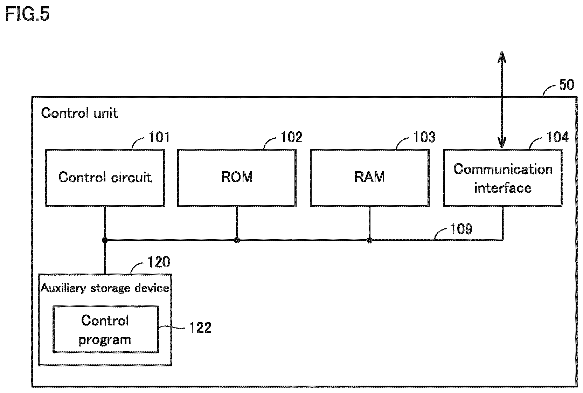

The hardware configuration of the control unit 50 shown in FIG. 2 will be described below with reference to FIG. 5. FIG. 5 is a diagram illustrating an example of the hardware configuration of the control unit 50.

The control unit 50 includes a control circuit 101, a read only memory (ROM) 102, a random access memory (RAM) 103, a communication interface 104, and an auxiliary storage device 120. These components are connected to an internal bus 109.

The control circuit 101 is constituted by, for example, at least one integrated circuit. The integrated circuit may be constituted by at least one CPU, at least one graphics processing unit (GPU), at least one application specific integrated circuit (ASIC), at least one field programmable gate array (FPGA), or a combination thereof, for example.

The control circuit 101 controls the operation of the control unit 50 by executing various programs such as a control program 122. The control program 122 is a program for realizing the various processing steps shown in FIGS. 3 and 4. Upon receiving a command to execute the control program 122, the control circuit 101 reads the control program 122 from the auxiliary storage device 120 or the ROM 102 to the RAM 103. The RAM 103 functions as a working memory and temporarily stores various types of data necessary for executing the control program 122.

The communication interface 104 is an interface for performing periodic communication with an external device using a field network. Examples of the external device include the pump 56, the pressure holding valve 58A, the drawback valve 58B, and the orifice valve 58C, which have been described above. The field network is configured by adopting EtherCAT (registered trademark), EtherNet/IP (registered trademark), CC-Link (registered trademark), CompoNet (registered trademark), or the like.

The auxiliary storage device 120 is, for example, a storage medium such as a hard disk or a flash memory. The auxiliary storage device 120 stores the control program 122 and the like. Note that the control program 122 is not limited to being stored in the auxiliary storage device 120, and may be stored in a storage area of the control circuit 101 (e.g., cache memory), the ROM 102, the RAM 103, an external device (e.g., a server), or the like.

Furthermore, rather than being a standalone program, the control program 122 may be provided as part of a program. In this case, various types of processing pertaining to the present embodiment are realized in cooperation with the program. Even if the program does not include such a portion of modules, the program does not depart from the spirit of the control program 122 pertaining to the present embodiment. Furthermore, some or all of the functions provided by the control program 122 may be realized by dedicated hardware. Furthermore, the control unit 50 may be configured in a mode such as a so-called cloud service in which at least one server executes a part of the processing of the control program 122.

### <E. Flowchart Regarding Pre-processing for Tool Replacement>

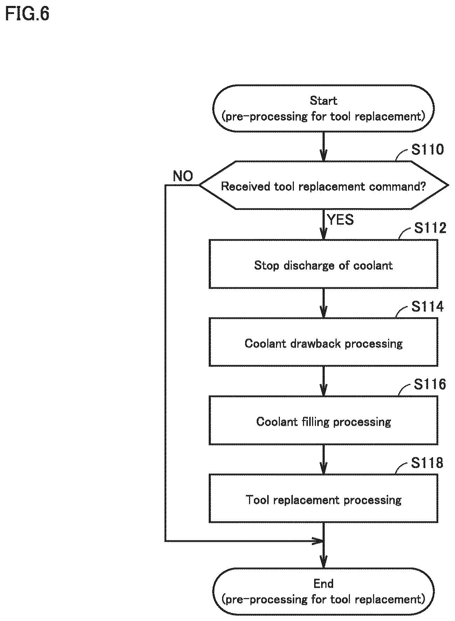

Next, a flowchart regarding pre-processing for tool replacement performed by the ATC 160 will be described with reference to FIG. 6. FIG. 6 is a flowchart illustrating a flow of pre-processing for tool replacement.

The processing shown in FIG. 6 is realized by the control unit 50 of the machine tool 100 executing the control program 122 described above. In other aspects, some or all of the processing may be executed by a CNC, a circuit element, or other hardware.

In step S110, the control unit 50 determines whether or not a tool replacement command to remove the tool T (see FIG. 2) from the spindle 180 has been received. If it is determined that the tool replacement command has been received (YES in step S110), the control unit 50 switches the control to step S112. If it is determined that the tool replacement command has not been received (NO in step S110), the control unit 50 ends the processing shown in FIG. 6.

In step S112, the control unit 50 controls the pump 56 so as to stop the discharge of the coolant from the tool T. Here, the pump 56 may continue to be driven at the minimum drive frequency, for example, or may be stopped completely.

In step S114, the control unit 50 starts the coolant drawback processing. More specifically, the control unit 50 sets the pressure holding valve 58A to the open state, sets the drawback valve 58B to the open state, and sets the orifice valve 58C to the closed state. As a result, the coolant remaining in the connecting passage L1, the through passage L2, and the flow passage F1 is discharged from the flow passage F2.

After a predetermined time has elapsed since starting the drawback processing in step S114, the control unit 50 switches the control from step S114 to step S116. The predetermined time may be set in advance, or may be set by the user. For example, the predetermined time is set longer than or equal to the time required for the coolant present from the pressure holding valve 58A to the tip-side opening of the tool T to return toward the flow passage F2. As a result, it is possible to reliably prevent the coolant from dripping from the tool T and the spindle 180.

In step S116, the control unit 50 starts the coolant filling processing. More specifically, the control unit 50 sets the pressure holding valve 58A to the closed state, sets the drawback valve 58B to the closed state, and sets the orifice valve 58C to the open state. Thereafter, the control unit 50 drives the pump 56 to pump the coolant to the flow passage F1. As a result, the section of the flow passage from the coolant tank 52 to the pressure holding valve 58A is filled with the coolant.

After a predetermined time has elapsed since starting the filling processing in step S116, the control unit 50 switches the control from step S116 to step S118. The predetermined time may be set in advance, or may be set by the user. For example, the predetermined time is set to a time longer than or equal to the time required for the coolant to fill the section of the flow passage from the coolant tank 52 to the pressure holding valve 58A.

In step S118, the control unit 50 controls the ATC 160 to execute tool replacement processing. More specifically, the control unit 50 removes the tool T mounted to the spindle 180, and mounts the next tool designated in the machining program to the spindle 180.

### <F. Flowchart regarding Machining Processing>

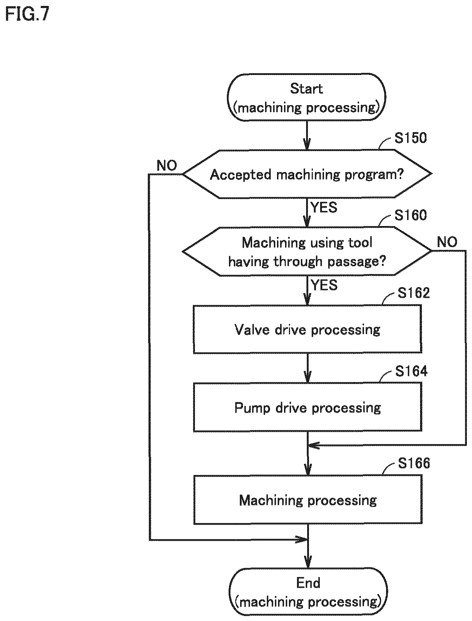

Next, a flowchart regarding workpiece machining processing will be described with reference to FIG. 7. FIG. 7 is a flowchart illustrating a flow of workpiece machining processing.

The processing shown in FIG. 7 is realized by the control unit 50 of the machine tool 100 executing the control program 122 described above. In other aspects, some or all of the processing may be executed by a CNC, a circuit element, or other hardware.

In step S150, the control unit 50 determines whether or not input of an NC program, which is, for example, a machining program for machining a workpiece, has been accepted. If it is determined that input of an NC program has been accepted (YES in step S150), the control unit 50 switches the control to step S 160. If it is determined that an NC program has not been received (NO in step S 150), the control unit 50 ends the processing shown in FIG. 7.

In step S160, the control unit 50 determines whether or not machining is to be performed using the tool T provided with the through passage L2 (see FIG. 2). For example, when a pre-registered tool is called in the machining program, or when an M code for turning on through-spindle coolant or the like is detected in the machining program, the control unit 50 determines that machining is to be performed using the tool T provided with the through passage L2. If it is determined that the machining is to be performed using the tool T (YES in step S160), the control unit 50 switches the control to step S162. If it is determined that the machining is not to be performed using the tool T (NO in step S160), the control unit 50 switches the control to step S166.

In step S162, the control unit 50 sets the pressure holding valve 58A to the open state, sets the drawback valve 58B to the closed state, and sets the orifice valve 58C to the closed state.

In step S164, the control unit 50 drives the pump 56 such that the coolant is discharged from the tool T.

In step S166, the control unit 50 drives the spindle 180 in accordance with the machining program to execute workpiece machining processing.

### <G. Other Matter>

The coolant mechanism in the embodiment described above is provided with the flow passage F3 and the orifice valve 58C, but if it is not necessary for the pump 56 to be driven constantly, for example, the flow passage F3 and the orifice valve 58C may be omitted. Alternatively, even in the case where the pump 56 needs to be constantly driven at the minimum drive frequency at which the discharge volume is smallest, a configuration is possible in which, while the pressure holding valve 58A is in the closed state, the drawback valve 58B in the flow passage F2 is opened such that a portion of the coolant discharged from the pump 56 is returned to the coolant tank 52 via the flow passage F2. Note that in such a modified example, it is preferable that the drawback valve 58B is not an open/closed valve, but rather is a control valve whose opening degree can be adjusted. In the drawback processing, the drawback valve 58B may be opened to an opening degree for drawback, and in the filling processing, the opening degree of the drawback valve 58B may be set to a filling opening degree that is smaller than the opening degree for drawback. In this way, a predetermined flow resistance can be generated in the flow passage F2 during the filling processing. In other words, it is possible to prevent the case where all of the coolant discharged from the pump 56 is returned to the coolant tank 52 via the flow passage F2, and it is possible to perform control such that only a portion of the coolant discharged from the pump 56 is returned from the flow passage F2 to the coolant tank 52. Therefore, it is possible to continue to drive the pump 56 while performing the filling processing for filling the section of the flow passage F1 up to the portion that is downstream of the branch point of the flow passage F2 and includes the pressure holding valve 58A.

The embodiments disclosed herein should be considered as illustrative in all respects and not restrictive. The scope of the present invention is defined by the claims, not by the above description, and is intended to include all modifications within the meaning and scope of the claims.

### List of Reference Numerals

- 40A: Tool storage unit

- 40B: Machining body
- 50: Control unit
- 52: Coolant tank
- 54: Motor driver
- 55: Motor
- 56: Pump
- 58A: Pressure holding valve
- 58B: Drawback valve
- 58C: Orifice valve
- 100: Machine tool
- 101: Control circuit
- 102: ROM
- 103: RAM
- 104: Communication interface
- 109: Internal bus
- 120: Auxiliary storage device
- 122: Control program
- 150: Magazine
- 170: Spindle head
- 175: Spindle barrel
- 180: Spindle
- 400: Operation panel
- 405: Display
- 406: Operation key
- D: Door
- F1: Flow passage
- F2: Flow passage
- F3: Flow passage
- FR: Fluid resistance
- L1: Connecting passage
- L2: Through passage
- P2: Branch point
- P3: Branch point
- T: Tool

## Claims

1. A machine tool for machining a workpiece using a tool that has a through passage formed therein and is configured to discharge a coolant from a tip-side opening of the through passage, the machine tool comprising:
a spindle to which the tool is mountable, and having a connecting passage connected to the through passage when the tool is mounted;
a pump configured to pump the coolant to a first flow passage connected to the connecting passage;
a first valve provided in the first flow passage or the connecting passage;
a second valve switchable at least between, with respect to a second flow passage branching off from the first flow passage at a branch point between the pump and the first valve, returning and not returning the coolant present on a first valve side of the branch point toward the second flow passage; and
a control unit configured to control the machine tool,
the control unit being configured to execute
drawback processing of, in a case where discharge of the coolant from the tool is stopped, opening the second valve and returning at least the coolant present between the first valve and the tip-side opening of the tool toward the second flow passage, and
filling processing of, after execution of the drawback processing, closing the first valve and filling a section of the first flow passage between the pump and the first valve with the coolant.

2. The machine tool according to claim 1,
wherein the first valve is provided in the first flow passage, and
a flow passage from the first valve to the spindle is shorter than a flow passage from the second valve to the spindle.

3. The machine tool according to claim 1 or 2, further comprising:
a third valve provided in a third flow passage branching off from the first flow passage at a branch point between the pump and the first valve,
wherein the filling processing further includes opening the third valve.

4. The machine tool according to claim 3,
wherein the first valve is provided in the first flow passage, and
a flow passage from the first valve to the spindle is shorter than a flow passage from the third valve to the spindle.

5. The machine tool according to claim 3 or 4,
wherein the branch point of the first flow passage and the third flow passage is closer to the spindle than the branch point of the first flow passage and the second flow passage is.

6. The machine tool according to any one of claims 1 to 5,
wherein the control unit starts execution of the filling processing after a predetermined time has elapsed since starting execution of the drawback processing.

7. A control method for a machine tool for machining a workpiece using a tool that has a through passage formed therein and is configured to discharge a coolant from a tip-side opening of the through passage,
the machine tool including:
a spindle to which the tool is mountable, and having a connecting passage connected to the through passage when the tool is mounted;
a pump configured to pump the coolant to a first flow passage connected to the connecting passage;
a first valve provided in the first flow passage or the connecting passage;
and a second valve switchable at least between, with respect to a second flow passage branching off from the first flow passage at a branch point between the pump and the first valve, returning and not returning the coolant present on a first valve side of the branch point toward the second flow passage, and
the control method comprising the steps of:
in a case where discharge of the coolant from the tool is stopped, opening the second valve and returning at least the coolant present between the first valve and the tip-side opening of the tool toward the second flow passage; and
after execution of the returning step, closing the first valve and filling a section of the first flow passage between the pump and the first valve with the coolant.

8. A control program for a machine tool for machining a workpiece using a tool that has a through passage formed therein and is configured to discharge a coolant from a tip-side opening of the through passage,
the machine tool including:
a spindle to which the tool is mountable, and having a connecting passage connected to the through passage when the tool is mounted;
a pump configured to pump the coolant to a first flow passage connected to the connecting passage;
a first valve provided in the first flow passage or the connecting passage;
and a second valve switchable at least between, with respect to a second flow passage branching off from the first flow passage at a branch point between the pump and the first valve, returning and not returning the coolant present on a first valve side of the branch point toward the second flow passage, and
the control program causing the machine tool to execute the steps of:
in a case where discharge of the coolant from the tool is stopped, opening the second valve and returning at least the coolant present between the first valve and the tip-side opening of the tool toward the second flow passage; and
after execution of the returning step closing the first valve, and filling a section of the first flow passage between the pump and the first valve with the coolant.
